# EUROPÄISCHE PATENTSCHRIFT

(11) **EP 1 344 049 B1**
(45) Veröffentlichungstag und Bekanntmachung des Hinweises auf die Patenterteilung: **12.05.2004**
(21) Anmeldenummer: 01989416.1
(22) Anmeldetag: 15.12.2001
(51) Int. Cl.: G01N 27/414, G01N 27/22, G01N 27/02

(54) **ELEKTRONISCHE MESSANORDNUNG UND VERFAHREN ZUM NACHWEIS VON CHEMISCHEN ODER BIOCHEMISCHEN KOMPONENTEN, MIT SENSOREN AUF DER BASIS VON IONENSENSITIVEN FELDEFFEKTTRANSISTOREN**
ELECTRONIC MEASURING INSTRUMENT AND METHOD FOR DETECTION OF CHEMICAL OR BIOCHEMICAL COMPONENTS
ENSEMBLE DE MESURE ELECTRONIQUE ET PROCEDE D'IDENTIFICATION DE COMPOSANTS CHIMIQUES OU BIOCHIMIQUES

(30) Priorität: 23.12.2000 DE 10065076
(43) Veröffentlichungstag der Anmeldung: 17.09.2003
(73) Patentinhaber: FORSCHUNGSZENTRUM JÜLICH GMBH, 52425 Jülich (DE)
(72) Erfinder: SCHÖNING, Michael, Josef, 52425 Jülich (DE); OTTO, Ralph, B-4721 Kelmis (BE); JOHNEN, Frank, 52428 Jülich (DE)
(86) Internationale Anmeldenummer: PCT/DE2001/004735
(87) Internationale Veröffentlichungsnummer: WO 2002/052252

(56) Entgegenhaltungen:
- WO-A-00/59370
- DE-A- 19 708 166
- US-A- 5 164 319
- US-A- 5 594 163
- US-A- 5 980 708

## Beschreibung

Die Erfindung betrifft eine Meßelektronik auf der Basis ionensensitiver Feldeffekttransistoren zum Nachweis chemischer oder biochemischer Komponenten. Sie betrifft weiterhin ein Verfahren zum Nachweis solcher Komponenten.

Elektrochemische Sensoren auf der Basis ionensensitiver Feldeffekttransistoren (ISFET) stellen eine miniaturisierte Alternative zu herkömmlichen analytischen Meßverfahren dar. Aufgrund ihrer Miniaturisierbarkeit und der Kompatibilität zur Siliziumplanartechnologie lassen sie sich einerseits kombinieren zu Multisensoranordnungen in Form von Sensorarrays, andererseits können sie in hohen Stückzahlen hergestellt werden. Eine ausführliche Übersicht über solche Sensoren findet sich u.a. in der Arbeit von H. Suzuki (Advances in the microfabrication of electrochemical sensors and systems, Electroanalysis 12, No. 9, 2000, S. 703-715).

Nachteilig ist insbesondere für ionensensitive Feldeffekttransistoren, daß sie bisher in den meisten Fällen, beispielsweise in der industriellen Prozeßtechnik, immer noch nicht kommerziell erhältlich sind, da die Langzeitstabilität und die Korrosionsbeständigkeit in der Regel nicht den Anforderungen genügen.

Deshalb wurden von Schöning et al. (M.J. Schöning, D. Tsarouchas, L. Beckers, J. Schubert, W. Zander, P. Kordos, H. Lüth, A highly long-term stable siliconbased pH sensor fabricated by pulsed laser deposition technique, Sensors and Actuators B 35, 1996, 228-233) ein sog. EIS- (Elektrolyt-Isolator-Silizium) Sensor vorgeschlagen. Dieser Sensor basiert zwar auf dem gleichen Meßprinzip wie ein ISFET, d. h. die Sensoreigenschaften bleiben erhalten, allerdings benötigt er keine zusätzlichen Passivierungsschichten. Er zeichnet sich somit durch höhere Langzeitstabilität und bessere Korrosionsbeständigkeit aus.

Die Charakterisierung solcher kapazitiver EIS-Sensoren für den Sensoreinsatz erfolgt normalerweise mittels C/V- (Capacitance-/Voltage) Messung. Bei diesen Meßverfahren wird zunächst die komplexe Impedanz der Sensoranordnung bei einer variablen Gleichspannung erfaßt. Da der Sensor in guter Näherung einer Kondensatoranordnung, und die Meßgröße somit einer Kapazität entspricht, läßt sich aus der Impedanz bei einer vorgegebenen Frequenz die Kapazität ermitteln.

Kommerziell erhältliche Impedanzanalysatoren, wie z. B. das Gerät IM5d der Firma Zahner Elektrik, beaufschlagen hierzu einen Sensor mit einer variablen Gleichspannung, der eine Wechselspannung im mV-Bereich als Meßsignal überlagert wird. Gemessen wird dann der Wechselstrom durch die komplexe Impedanz. Aufgrund der resultierenden Phasenverschiebung zwischen Wechselspannung und Wechselstrom sowie der Änderung der Amplitude des Wechselsignals, kann man auf die Kapazität des Sensors zurückschließen. In einem on-line Report läßt sich direkt die Kapazität als Meßgröße über der Gleichspannung auftragen. Ändert sich die Konzentration einer nachzuweisenden Spezies in einem Analyten, so führt dies zu einer Verschiebung der C/V-Kurve entlang der Spannungsachse. Diese wiederum repräsentiert die Sensorgröße. Möchte man die Sensorgröße direkt dynamisch, d.h. zeitabhängig darstellen, so kann man die Meßgröße, d.h. die Kapazität über eine Regelschleife auch auf einen festen Arbeitspunkt einstellen und direkt die Spannungsänderungen im sogenannten ConCap-Modus (constant capacitance) auslesen.

Solche kommerziell erhältlichen Geräte, mit denen die oben beschriebenen Messungen durchgeführt werden können, sind universell einsetzbare Meßgeräte für die Elektrochemie, die in einem großen Meßbereich sehr genaue Meßergebnisse liefern.

Nachteilig ist für diese Geräte ein sehr hoher schaltungstechnischer Aufwand erforderlich, der zu einem hohen Preis der Geräte führt. Die Geräte finden zudem nur in relativ großen Gehäusen Platz. Es handelt sich somit um nicht-portable Geräte, die nur von Experten bedient werden können. Die Messungen sind nur mit erhöhtem Aufwand durchzuführen.

Aufgabe der Erfindung ist es, eine Meßanordnung zum Nachweis von chemischen oder biochemischen Komponenten in Flüssigkeiten oder Gasen bereit zu stellen, die die beim Stand der Technik auftretenden Nachteile nicht aufweist und die insbesondere zur Realisierung eines kompakten und preiswerten Meßgerätes führt.
Aufgabe der Erfindung ist weiterhin ein entsprechendes Verfahren zum Nachweis dieser Komponenten in Flüssigkeiten oder Gasen bereit zu stellen.

Die Aufgabe wird gelöst durch eine Meßanordnung gemäß Hauptanspruch sowie durch ein Verfahren gemäß Nebenanspruch. Vorteilhafte Ausführungsformen ergeben sich aus den jeweils darauf rückbezogenen Ansprüchen.

Die Meßanordnung zum Nachweis einer chemischen oder biochemischen Komponente umfaßt:
- einen Meßaufbau aus Sensor und Referenzelektrode,
- eine Gleichspannungsquelle, die in Kontakt steht zu einem
- Potentiostat,
- einen Signalgenerator,
- eine spannungsgesteuerte Stromquelle die in Kontakt mit dem Sensor steht,
- einen Meßwertverstärker und einen Gleichrichter sowie
- einen Integralregler, der mit dem Signalgenerator in Kontakt steht.

Der Sensor kann beispielsweise eine EIS-Struktur auf Basis eines ionensensitiven Feldeffekttransistors (ISFET) oder auch einen ISFET als solchen umfassen. Der Sensor umfaßt weiterhin ein (bio)/chemisch sensitives Material (z. B. pH-, ionen-, immuno-, enzym-, gas-, flüssigkeitssensitiv). Dieses steht in unmittelbarem Kontakt mit der nachzuweisenden Komponente im Analyten. Das sensitive Material kann aus einer oder mehreren Schichten bestehen, wie z. B. Metallschichten bzw. Elektroden, membranbedeckte Schichten, enzym- oder antikörperbedeckte Schichten, die üblicherweise in der Chemo- und Biosensorik Verwendung finden.
Vorteilhaft ist die Meßanordnung im Vergleich zu herkömmlichen Impedanzmeßsystemen sehr klein. Dadurch ist die Realisierung eines kompakten und preiswerten Meßgerätes, das für den Feldeinsatz geeignet ist, möglich.

Weiterhin ist zwischen Signalgenerator und Ausgang des Meßwertverstärkers ein Phasenkomparator vorgesehen. Der Phasenkomparator dient zur Generierung eines binären Signals.

Besonders vorteilhaft ist zwischen Phasenkomparator und Gleichspannungsquelle ein Pulssplitter als Mittel zur Trennung unterschiedlich langer Pulse angeordnet. Ohne Einschränkung der Erfindung ist es jedoch auch denkbar die Trennung der Pulse softwaremäßig (z. B. durch einen Mikrocontroller) durchzuführen.

In einer weiteren Ausgestaltung der Erfindung ist als Gleichspannungsquelle ein DAC-Wandler vorgesehen und zwischen DAC-Wandler und Mittel zur Trennung unterschiedlich langer Pulse ein Mittel zur Datenverarbeitung angeordnet. Als Mittel kann ein Integralregler vorgesehen sein. Es ist allerdings genauso gut vorstellbar, daß die Datenverarbeitung durch einen Mikrocontroller, einen Personal Computer oder einen digitalen Integralregler vorgenommen wird.

Weitere Vorteile der erfindungsgemäßen Meßanordnung gegenüber dem Stand der Technik sind:
- Im Vergleich zu den kommerziell erhältlichen Impedanz-Meßsystemen kann die Meßanordnung samt Meßelektronik sehr preiswert hergestellt werden.
- Die Erfassung von Meßwerten erfolgt in einem eingeschränkten Bereich. Dies ermöglicht eine einfache Schaltungstechnik; ein die Meßanordnung enthaltendes Meßgerät wird somit kompakt und preiswert.
- Einfache Bedienung eines die Meßanordnung enthaltenden Meßgerätes.

Das erfindungsgemäße Verfahren zum Nachweis einer Analytsubstanz mit einer Meßanordnung, umfassend einen Meßaufbau aus Sensor und Referenzelektrode sowie einer Meßelektronik, beruht darauf, daß die Impedanz des Sensors während der Messung konstant gehalten wird. Änderungen der Konzentration einer Komponente wirken sich während der Messung auf das sensitive Material des Sensors aus. Spannungsänderungen über dem Sensor sind die Folge, die über Meßwertverstärker, Gleichrichter und Integralregler an den Signalgenerator geführt werden. Um die Impedanz des Sensors konstant zu halten, dient als Stellgröße die Frequenz der Meßwechselspannung am Sensor.
Zur Regelung der Impedanz (1. Regelung) wird für die Meßelektronik der Signalgenerator, die spannungsgesteuerte Stromquelle sowie der Meßwertverstärker und der Gleichrichter benötigt. Über den Signalgenerator wird eine konstante Wechselspannung ausgegeben, die durch eine spannungsgesteuerte Stromquelle in einen konstanten Wechselstrom überführt wird. Der Wechselanteil der Meßspannung gelangt an den Meßwertverstärker und wird, um ein Maß für die Amplitude der Meßwechselspannung zu erhalten, gleichgerichtet, mit einer Referenzspannung verglichen, und eine Spannungsabweichung über die Frequenz der Meßwechselspannung über einen Integralregler wieder dem Signalgenerator zugeführt, der die Frequenz der erzeugten Wechselspannung so ändert, daß das Meßwechselspannungssignal am Sensor konstant bleibt. Durch Vorgabe einer konstanten Wechselspannung und eines konstanten Wechselstromes ist somit die Impedanz konstant. Dies ist, in Abkehr von den bisherigen Meßverfahren elektrochemischer Sensoren, ein völlig neues Meßprinzip, das vorteilhaft zu den oben genannten Vorzügen der Meßanordnung bzw. der bezüglich Bauweise und Preis entsprechenden Meßgeräte führt.
Die zu erfassenden Größen (Meßwechselspannung über dem Sensor, Phasenverschiebung, Frequenz) befinden sich dabei in einem engen Bereich.

Weiterhin wird ein Spannungsabfall über dem Sensor auf einen mit einer vorgegebenen Gleichspannung identischen Wert geregelt.
Dem Sensor wird zur C/V und ConCap-Messung über die Gleichspannungsquelle eine Gleichspannung vorgegeben, die über den Signalgenerator mit einer konstanten Wechselspannung beaufschlagt ist. Über die spannungsgesteuerte Stromquelle wird ein Strom am Sensor erzeugt. Der Strom verursacht einen Spannungsabfall über dem Sensor. Der Potentiostat sorgt dafür, daß dieser Spannungsabfall identisch mit einer vorgegebenen Gleichspannung U_{bias} ist (2. Regelung) .

Besonders vorteilhaft wird als Ausgangssignal ein binäres Signal, das aus der Frequenz und der Phase der Meßwechselspannung über dem Sensor besteht, generiert. Binäre Signale in der Meßtechnologie sind vorteilhaft weit unempfindlicher gegenüber Änderungen der Leitungsparameter, wie beispielsweise der Leitungslänge oder des Leitungsaufbaus, als analoge Meßsignale. Binäre Meßsignale sind zudem weniger als analoge Signale durch elektromagnetische Einstreuung gestört, und sie können ohne Verluste an Genauigkeit verstärkt oder mit einfachen Hilfsmitteln verarbeitet, z. B. integriert werden. Phase und Frequenz der Meßwechselspannung brauchen in Abkehr vom analogen Meßverfahren schaltungstechnisch nicht gesondert weiterverarbeitet werden. Das Signal enthält die Informationen zur Berechnung der Meßwerte, der Frequenz und der Phase. Das Signal dient somit als Regulativ dafür die Gleichspannung so zu regeln, daß die Kapazität des Sensors konstant gehalten wird.

Dabei können die Pulse der binären Signale getrennt und gemittelt werden.
Diese Form der Datenverarbeitung ermöglicht es, die Gleichspannung durch einen DAC-Wandler so zu regeln, daß die Kapazität des Sensors konstant gehalten wird. Dieser verfahrensschritt ist somit essentiell dafür, daß die Meßanordnung auch bei konstanter Kapazität des Sensors betrieben werden kann (ConCap-Modus: 3.Regelung).

Es erfolgt somit während des Verfahrens eine Regelung durch bis zu drei elektronische Regelkreise:
1. Nach Änderung der Meßwechselspannung durch Änderung der im Analyten nachzuweisenden Spezies wird in beiden Modi, also sowohl im C/V- als auch im Concap-Modus, immer die Impedanz des Sensors über die Frequenz der Meßwechselspannung konstant gehalten.
2. Regelung des Spannungsabfalls am Sensor über den Potentiostat auf einen mit der vorgegebenen Gleichspannung identischen Wert.
3. Im ConCap-Modus wird die Gleichspannung so geregelt, daß die Kapazität des Sensors konstant ist.

Das Meßverfahren ist die Grundlage dafür, daß die Meßanordnung, bzw. die diese enthaltenden Geräte, kompakt gebaut werden kann und somit auch für den transportablen Einsatz im Feld geeignet ist. Das Verfahren besitzt darüber hinaus folgende Vorteile:
- Auf Grund des neu entwickelten Meßprinzips kann ein EIS-Sensor in einem vorgegebenen Meßbereich genau betrieben werden.
- Zur Regelung der Impedanz wird ein konstanter Wechselstrom vorgegeben und die Meßwechselspannung über dem Sensor gemessen. Dieses Meßverfahren hat ein integrierendes Verhalten, d.h. es wird störunempfindlicher gemessen, als bei Vorgabe einer Spannung und Messung des Stroms.

Im folgenden wird die Erfindung an Hand der Ausführungsbeispiele und der beigefügten Figuren näher erläutert.

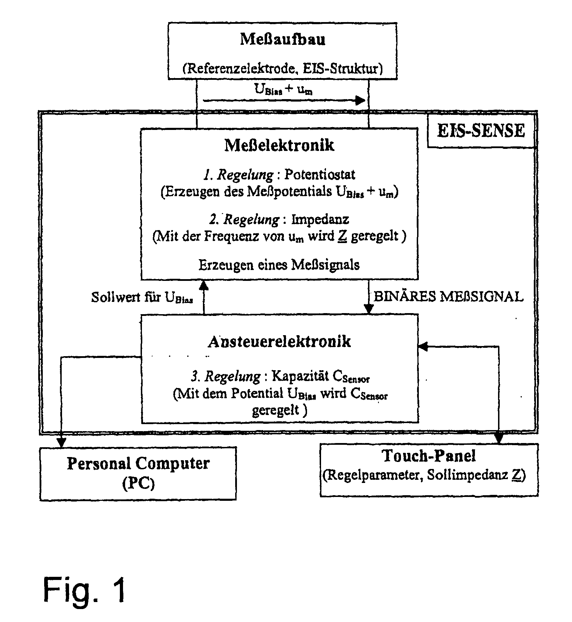

Fig. 1 zeigt schematisch das entwickelte Gerät EIS-SENSE, bestehend aus der Meßelektronik und einer Ansteuerelektronik sowie die verschiedenen Regelkreise während der Messung. Die Schnittstellen zwischen den Modulen und dem Meßaufbau und die Verbindungen zu den als Benutzerinterface benötigten peripheren Geräten, Touch-Screen und PC, sind ebenfalls dargestellt.
Die Meßelektronik legt ein Potential (U_{Bias}) über den Meßaufbau an. Da der Meßaufbau aus einer Elektrodenanordnung von Referenzelektrode und EIS-Struktur besteht, ist dafür ein Regelkreis notwendig. Dieser Regelkreis wird als Potentiostat bezeichnet und ist einer von bis zu drei notwendigen Regelungen. Zusätzlich erfordert das Meßprinzip noch die Regelung der Impedanz des Meßaufbaus. Als Stellgröße dient die Frequenz der Meßwechselspannung (Uₘ). Aus den gemessenen Daten erzeugt die Meßelektronik ein binäres Meßsignal, aus dem sich die Kapazität der EIS-Struktur errechnen läßt. Die Ermittlung der Kapazität aus diesem Signal wird in der Ansteuerelektronik mit Hilfe eines Mikrocontrollers durchgeführt. Die Ansteuerelektronik bearbeitet das binäre Meßsignal der Meßelektronik durch eine interne Signalanpassung so, daß es von dem Mikrocontroller eingelesen und verarbeitet werden kann. Mit Hilfe des zugehörigen Steuerprogramms ist der Mikrocontroller in der Lage, die errechneten Meßwerte zu einem PC zu senden und auf einem Touch-Panel on-line graphisch darstellen zu lassen. Mit Hilfe des Touch-Panels kann der Benutzer Einfluß auf die Messungen nehmen und Parameter ändern.
Während der ConCap-Messung, ist auch die 3. Regelung (Potentiostat, z. B. in Form eines Proportional-Integral-Reglers) des Meßsystems aktiv. Dieser PI-Regler ist Bestandteil des Steuerprogrammes im Mikrocontroller. Mit dem Potential U_{Bias} als Stellgröße regelt er die Kapazität vom Meßaufbau auf einen festen Wert ein. Damit der Mikrocontroller ein Potential vorgeben kann, beinhaltet die Ansteuerelektronik einen 13-Bit DA-Wandler.

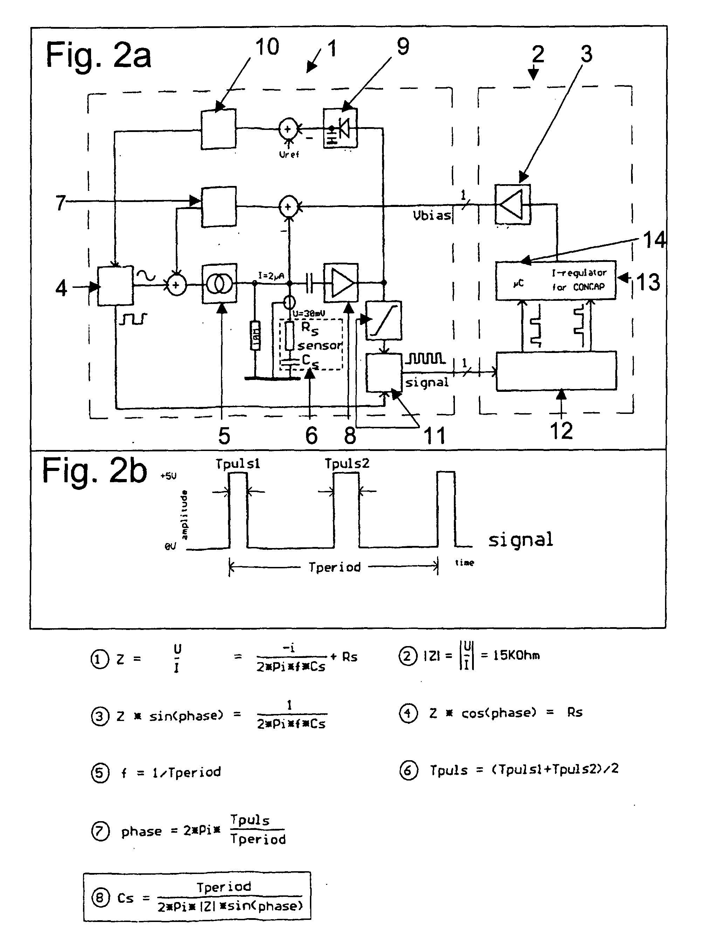

Fig. 2a zeigt ein Blockschaltbild der Meßelektronik 1 und das Zusammenwirken mit der Ansteuerelektronik 2 während der ConCap-Messung. Meßelektronik 1 und Ansteuerelektronik 2 setzen sich jeweils aus den Bauteilen der beiden großen, in der Figur gestrichelten, Kästen zusammen. Der Messelektronik 1 wird eine Spannung (U_{Bi-} ₐₛ) über eine Gleichspannungsquelle 3 vorgegeben. Diese Gleichspannung wird mit einem Wechselspannungsanteil eines Signalgenerators 4 beaufschlagt (durch Addition der Spannungen, symbolisiert durch das +-Zeichen rechts vom Signalgenerator 4) und mit Hilfe einer spannungsgesteuerten Stromquelle 5 in einen Strom umgewandelt. Dieser Strom verursacht einen Spannungsabfall über dem Sensor 6 (kleiner gestrichelter Kasten). Ein Potentiostat 7, z. B. ein Proportional-Integral-Regler, sorgt dafür, daß dieser Spannungsabfall gleich der vorgegebenen Spannung U_{Bias} ist. Dies hat zur Folge, daß die Spannung am Sensor immer auf U_{bias} eingestellt ist.
Der Wechselspannungsanteil wird über einen Meßwertverstärker 8 verstärkt und durch einen Gleichrichter 9 gleichgerichtet. Diese Gleichspannung ändert sich, wenn eine Änderung der Sensorimpedanz erfolgt. Dies ist durch das +-Zeichen zwischen Gleichrichter 9 und Integralregler 10 dargestellt. Der Integral-Regler 10 wirkt dieser Änderung durch Regelung der Frequenz der Meßwechselspannung entgegen. Somit wird der Sensor bei einer konstanten Impedanz betrieben. Ein Phasenkomparator 11 vergleicht den zeitlichen Verlauf, also die Phase von in den Sensor eingespeistem Wechselstrom und der am Sensor gemessenen Wechselspannung (Meßspannung). Hierzu muß das sinusförmige Signal am Ausgang des Meßwertverstärkers 8 zunächst in ein Rechtecksignal umgewandelt werden. Man erhält ein binäres Signal mit der Information über Meßfrequenz und Phasenverschiebung.
In einer solchen Meßanordnung sind vorteilhaft nur ein Eingangs- und ein Ausgangskabel zur Signalübertragung nötig.
Die gesamte Meßelektronik der Fig. 2a kann in einem sehr kleinen Gehäuse untergebracht werden (z. B. 6 x 10 x 3 cm).

In Fig. 2b ist dargestellt, wie man mit durch bauteilbedingte Toleranzen (Offsetspannungen, Schalthysteresen des Komparators) verfälschten Meßsignalen operiert. Der Fehler im Meßsignal macht sich durch verschieden lange Pulsdauern im binären Signal bemerkbar. In Fig. 2b wird beispielsweise gezeigt, daß sich ein kurzer und ein langer Puls abwechseln. Durch einen Phasensplitter 12 werden die Pulse getrennt und der Fehler durch Mittelung der Pulsdauern herausgerechnet. Da dies mit dem verwendeten Mikrocontroller 14 realisiert wird, ist keine zusätzliche Signalanpassungselektronik mehr notwendig.
Zusätzlich kann der in der Software des Mikrocontrollers 14 enthaltene Regler 13 eine Stellgröße errechnen, die die Kapazität konstant hält. Diese Stellgröße wird mit Hilfe eines DA-Wandlers von ihrer digitalen Form in eine analoge Spannung (U_{Bias}) umgesetzt.

Mit den zu Figur 2a und 2b aufgeführten acht Gleichungen läßt sich über die Frequenz, die Phasenverschiebung und der konstanten Impedanz auf die Kapazität des Sensors schließen (Gleichung 8).

Es bedeuten:
Z=Impedanz; U=Spannung; I=Stromstärke; -i=komplexe Zahl; f=Frequenz der Wechselspannung; Cs=Kapazität, Rs=Widerstand des Sensors
Tperiod=Periodendauer; Tpuls=Pulsdauer

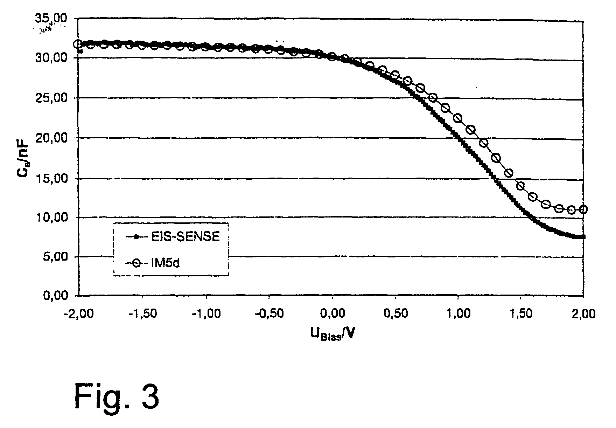

Fig. 3 zeigt zwei C/V-Kurven, die mit dem herkömmlichen Meßsystem IM5d der Firma Zahner Elektrik (leere kreisförmige Symbole) bzw. der neu entwickelten Meßanordnung EIS-SENSE (ausgefüllte quadratische Sysmbole) aufgenommen wurden. Man erkennt, daß sich im linken Bereich des Diagramms die Kurven nicht unterscheiden. Im rechten Teil des Diagramms findet zwar eine Abweichung der Kurvenverläufe statt, allerdings wird dies nicht durch eine fehlerhafte Messung des Meßgerätes EIS-SENSE verursacht, sondern durch den hier gewählten Meßmodus, bei dem die Sollimpedanz durch eine Frequenzänderung erfolgt. Der entscheidende Parameter bei der Messung ist das reproduzierbare Verhalten im linearen Bereich der Kennlinie, zwischen 0,9 und 1,5 V in dem dann im Anschluß ein fester Arbeitspunkt eingeregelt werden kann.

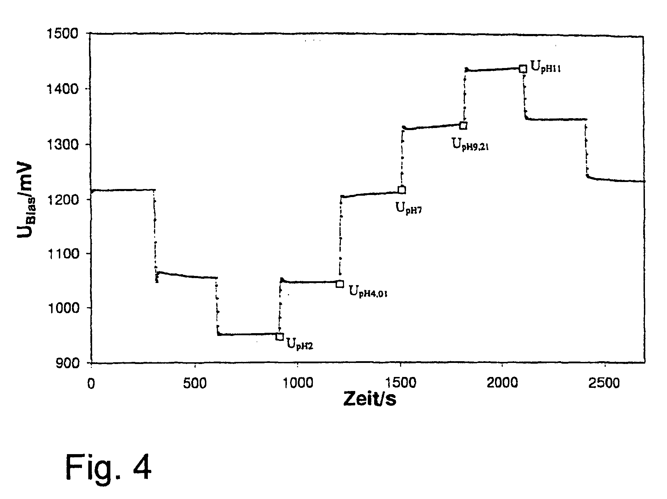

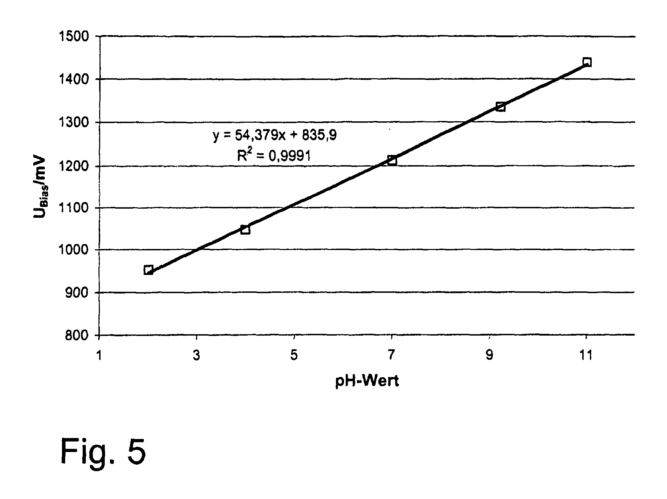

Dies wird anhand von Fig. 4 verdeutlicht. Die Figur zeigt eine typische ConCap-Messung, wie sie mit dem entwickelten Meßgerät EIS-SENSE durchgeführt wurde. Man erkennt den für einen pH-Sensor typischen stufenförmigen Kurvenverlauf für die unterschiedlichen pH-Konzentrationen zwischen pH 2 und pH 11.
Die daraus ermittelte Übertragungskennlinie in Fig.5 zeigt ein charakteristisches pH-abhängiges Verhalten mit einer Steilheit von 54,4 mV pro Konzentrationsdekade und einer hohen Linearität mit einem Korrelationskoeffizienten von R²=0,9991. Reproduzierbarkeitsmessungen, die simultan mit einem kommerziell verfügbaren Meßgerät der Firma Zahner Elektrik durchgeführt wurden führten, im Rahmen der Meßgenauigkeit des Sensors, zu denselben Resultaten.

## Patentansprüche

1. Messanordnung zum Nachweis einer chemischen oder biochemischen Komponente umfassend:
- einen Messaufbau aus kapazitivem ISFET-basierten Sensor(6)und Referenzelektrode,
- eine Gleichspannungsquelle(3), die in Kontakt steht zu einem
- Potentiostat(7),
- einen Signalgenerator (4)
- eine spannungsgesteuerte Stromquelle(5), die in Kontakt mit dem Sensor (6) steht,
- einen Messwertverstärker(8) und einen Gleichrichter (9) sowie
- einen Integralregler (10), der mit dem Signalgenerator (4) in Kontakt steht,
**dadurch gekennzeichnet,dass**
der Integralregler (10) für die konstanthaltung der Impedanz des Sensors (6) durch Regelung der Frequenz einer Messwechselspannung am Sensor (6) vorgesehen ist.

2. Meßanordnung nach vorhergehendem Anspruch,
**dadurch gekennzeichnet, daß** zwischen Signalgenerator(4)und Ausgang des Meßwertverstärkers(8)ein Phasenkomparator (11) vorgesehen ist.

3. Meßanordnung nach vorhergehendem Anspruch,
**dadurch gekennzeichnet, daß** zwischen Phasenkomparator(11)und Gleichspannungsquelle (3) wenigstens ein Mittel zur Trennung unterschiedlich langer Pulse angeordnet ist.

4. Meßanordnung nach vorhergehendem Anspruch,
**dadurch gekennzeichnet, daß** als Mittel ein Pulssplitter(12)vorgesehen ist.

5. Meßanordnung nach einem der vorhergehenden Ansprüche, **dadurch gekennzeichnet, daß** als Gleichspannungsquelle(3)ein DAC-Wandler vorgesehen ist, und zwischen DAC-Wandler und Mittel zur Trennung unterschiedlich langer Pulse ein Mittel zur Datenverarbeitung vorgesehen ist.

6. Transportables, kompaktes Meßgerät zum Nachweis einer chemischen oder biochemischen Komponente mit einer Meßanordnung nach einem der vorhergehenden Ansprüche.

7. Verfahren zum Nachweis einer Analytsubstanz mit einer Messanordnung, umfassend einen Messaufbau aus kapazitivem ISFET-basierten Sensor(6)und Referenzelektrode sowie einer Messelektronik, wobei die Impedanz des Sensors während der Messung konstant gehalten wird
**dadurch gekennzeichnet, dass**
ein Integralregler(10) die Impedanz des Sensors(6) durch Regelung der Frequenz einer Messwechselspannung konstant hält.

8. Verfahren nach vorhergehendem Anspruch,
**dadurch gekennzeichnet, daß** ein Spannungsabfall über dem Sensor auf einen mit einer vorgegebenen Gleichspannung identischen Wert geregelt wird.

9. Verfahren nach einem der Ansprüche 7 oder 8,
**dadurch gekennzeichnet, daß** als Ausgangssignal ein binäres Signal, das aus der Frequenz und der Phase der Meßwechselspannung über dem Sensor besteht, generiert wird.

10. Verfahren nach einem der Ansprüche 7 bis 9,
**dadurch gekennzeichnet, daß** die Pulse der binären Signale getrennt und gemittelt werden.

11. Verfahren nach einem der Ansprüche 7 bis 10,
**dadurch gekennzeichnet, daß** aus der Meßwechselspannung über dem Sensor die Kapazität zwischen Sensor und Referenzelektrode ermittelt wird.

12. Verfahren nach einem der Ansprüche 7 bis 11,
**dadurch gekennzeichnet, daß** durch Regelung der Gleichspannung die Kapazität des Sensors konstant gehalten wird.

## Claims

1. Measuring instrument for detection of a chemical or biochemical component comprising:
- a measuring assembly made up of a capacitive ISFET based sensor (6) and reference electrode,
- a DC voltage source (3), which is in contact with a
- potentiostat (7),
- a signal generator (4),
- a voltage-controlled current source (5), which is in contact with the sensor (6),
- a measured value amplifier (8) and a rectifier (9) as well as
- an integral control unit (10), which is in contact with the signal generator (4),
**characterised by** the fact that
the integral control unit (10) for keeping the impedance of the sensor (6) constant by controlling the frequency of a measuring alternating voltage is provided on the sensor (6).

2. Measuring instrument according to the previous claim, **characterised by** the fact that a phase comparator (11) is provided between the signal generator (4) and output of the measured value amplifier (8).

3. Measuring instrument according to the previous claim, **characterised by** the fact that at least one means of separating pulses of different lengths is arranged between the phase comparator (11) and the DC voltage source (3).

4. Measuring instrument according to the previous claim, **characterised by** the fact that a pulse splitter (12) is provided as the means.

5. Measuring instrument according to one of the previous claims, **characterised by** the fact that a DAC converter is provided as a DC voltage source (3) and a means of data processing is provided between the DAC converter and the means of separating pulses of different lengths.

6. Portable, compact measuring equipment for detection of a chemical or biochemical component with a measuring instrument according to one of the previous claims.

7. Method for detection of a substance for analysis with a measuring instrument comprising a measuring assembly made up of a capacitive ISFET based sensor (6) and reference electrode as well as measuring electronics, in which the impedance of the sensor is kept constant during measuring
**characterised by** the fact that
an integral controller (10) keeps the impedance of the sensor (6) constant by controlling the frequency of a measuring AC voltage.

8. Method according to the previous claim, **characterised by** the fact that a drop in voltage is controlled through the sensor at a value identical to a pre-set direct voltage.

9. Method according to claims 7 or 8, **characterised by** the fact that a binary signal, which consists of the frequency and phase of the measuring AC voltage through the sensor, is generated as an output signal.

10. Method according to claims 7 to 9, **characterised by** the fact that the pulses of the binary signals are separated and averaged.

11. Method according to one of claims 7 to 10, **characterised by** the fact that the capacity between the sensor and reference electrode is determined based on the measuring AC voltage through the sensor.

12. Method according to one of claims 7 to 11, **characterised by** the fact that the capacity of the sensor is kept constant by controlling the DC voltage.

## Revendications

1. Dispositif de mesure pour détecter un constituant chimique ou biochimique comprenant :
- une structure de mesure constituée d'un capteur (6) capacitif à base d'un ISFET et d'une électrode de référence ;
- une source (3) de tension continue qui est en contact avec
- un potentiostat (7),
- un générateur (4) de signal,
- une source (5) de courant qui est commandée en tension et qui est en contact avec le capteur (6),
- un amplificateur (8) de valeurs de mesure et un redresseur (9), ainsi que
- un régulateur (10) intégral qui est en contact avec le générateur (4) de signal,
**caractérisé en ce que** le régulateur (10) intégral est prévu pour maintenir constante l'impédance du capteur (6) par régulation de la fréquence d'une tension alternative de mesure sur le capteur (6).

2. Dispositif de mesure suivant la revendication précédente, **caractérisé en ce qu'**il est prévu un comparateur (11) de phase entre le générateur (4) de signal et la sortie de l'amplificateur (8) de valeurs de mesure.

3. Dispositif de mesure suivant la revendication précédente, **caractérisé en ce qu'**il est monté entre le comparateur (11) de phase et la source (3) de tension continue au moins un moyen de séparation d'impulsions de longueur différente.

4. Dispositif de mesure suivant la revendication précédente, **caractérisé en ce qu'**il est prévu comme moyen un diviseur (12) d'impulsions.

5. Dispositif de mesure suivant l'une des revendications précédentes, **caractérisé en ce qu'**il est prévu comme source (3) de tension continue un convertisseur numérique à analogie et comme moyen de séparation d'impulsions de longueur différente un moyen informatique.

6. Appareil de mesure transportable et peu encombrant pour détecter un constituant chimique ou biochimique comprenant un dispositif de mesure suivant l'une des revendications précédentes.

7. Procédé de détection d'une substance d'analyte par un dispositif de mesure comprenant une structure de mesure constituée d'un capteur (6) capacitif à base d'un ISFET et d'une électrode de référence, ainsi qu'une électronique de mesure, l'impédance du capteur étant maintenue constante pendant la mesure,
**caractérisé en ce que**
un régulateur (10) intégral maintient constante l'impédance du capteur (6) en régulant la fréquence d'une tension alternative de mesure.

8. Procédé suivant la revendication précédente, **caractérisé en ce que** l'on règle une chute de tension aux bornes du capteur sur une valeur identique à une tension continue donnée à l'avance.

9. Procédé suivant l'une des revendications 7 ou 8, **caractérisé en ce que** l'on génère comme signal de sortie un signal binaire constitué à partir de la fréquence et de la phase de la tension alternative de mesure aux bornes du capteur.

10. Procédé suivant l'une des revendications 7 à 9, **caractérisé en ce que** l'on sépare et l'on fait la moyenne des impulsions des signaux binaires.

11. Procédé suivant l'une des revendications 7 à 10, **caractérisé en ce que** l'on détermine la capacité entre le capteur et l'électrode de référence à partir de la tension alternative de mesure aux bornes du capteur.

12. Procédé suivant l'une des revendications 7 à 11, **caractérisé en ce que** l'on maintient constante la capacité du capteur en régulant la tension continue.
